# EUROPEAN PATENT APPLICATION

(11) **EP 4 310 238 A1**
(43) Date of publication of application: **24.01.2024**
(21) Application number: 21936530.1
(22) Date of filing: 28.04.2021
(51) Int. Cl.: D06F 39/00, D06F 39/04, D06F 33/00, D06F 25/00

(54) **CLOTHES TREATMENT DEVICE**

(30) Priority: 13.04.2021 CN 202110395057
(71) Applicant: Wuxi Little Swan Electric Co., Ltd., Wuxi, Jiangsu 214028 (CN)
(72) Inventor: ZHANG, Ying, Wuxi, Jiangsu 214028 (CN); ZHANG, Wei, Wuxi, Jiangsu 214028 (CN); ZHOU, Zhendong, Wuxi, Jiangsu 214028 (CN); MIAO, Yulai, Wuxi, Jiangsu 214028 (CN); DING, Hao, Wuxi, Jiangsu 214028 (CN)
(74) Representative: Whitlock, Holly Elizabeth Ann
(86) International application number: PCT/CN2021/090780
(87) International publication number: WO 2022/217657

(57) **Abstract**

The present application discloses a clothes treatment device, the clothes treatment device comprising: a drum component, the drum component comprising an outer tub and an inner tub which is rotatably arranged within the outer tub, the interior of the outer tub being provided with a water storage area; a first heating member, the first heating member being disposed in the water storage area; a first water supply pipe, the first water supply pipe being provided with a water supply valve; a connecting member, the connecting member being disposed on the outer tub and being provided with a water supply structure for leading water in the first water supply pipe to the interior of the outer tub; and a controller, which is configured to, in a steam washing mode, control a working state of the water supply valve on the basis of the water level of the water storage area and control the heating member to heat water within the water storage area, so as to generate steam. An additional steam generator does not need to be provided, a heating member is mounted by using a space inside of an outer tub, and the structure is simple and compact; in addition, a water supply structure disposed on a connecting member can avoid wetting clothes when supplying water to a water storage area, helping to meet the requirements of steam washing.

## Description

### CROSS-REFERENCE TO RELATED APPLICATIONS

This application is filed based on and claims priority to Chinese Patent application No. 202110395057.6 filed on April 13, 2021, the contents of which are hereby incorporated by reference in its entirety.

### TECHNICAL FIELD

The application relates to the technical field of clothes washing and care, and in particular to a clothes treatment device.

### BACKGROUND

In the related art, a clothes treatment device equipped with a steam washing function adds an additional steam generator based on an ordinary clothes treatment device. High-temperature steam generated by the steam generator is introduced into a drum through pipes, and then sterilizes clothes inside an inner tub at high temperature. However, an additional steam generator needs to be added, which takes up space and increases cost. Furthermore, in order to supply water to the steam generator, a separate first water supply pipeline and a water supply valve need to be provided, which further increases the cost of the device.

### SUMMARY

In view of this, embodiments of the application provide a clothes treatment device, which is intended to effectively reduce the cost of the device based on providing a steam washing function.

Technical solutions of the embodiments of the application are implemented as follows.

An embodiment of the application provides a clothes treatment device, wherein the clothes treatment device includes a drum assembly, a first heating member, a first water supply pipeline, a connector, and a controller.

The drum assembly includes an outer tub and an inner tub rotatably arranged in the outer tub, and a water storage area is provided in interior of the outer tub.

The first heating member is arranged in the water storage area.

A water supply valve is arranged on the first water supply pipeline.

The connector is arranged on the outer tub, and is provided with a water supply structure configured to guide water in the first water supply pipeline to the interior of the outer tub.

The controller is configured to control an operation state of the water supply valve based on a water level of the water storage area in a steam washing mode, so that the water storage area is within a set water level range, and control the first heating member to heat water in the water storage area within the set water level range, to generate steam.

In some implementations, the clothes treatment device may further include a drying channel assembly.

The connector further communicates the interior of the outer tub to an inlet of the drying channel assembly.

Correspondingly, at least a part of the steam enters the inner tub after sequentially passing through the connector and the drying channel assembly.

In some implementations, the connector may be provided with a lint blocking structure configured to filter lint in the air, and water in the first water supply pipeline is also used to clean the lint blocking structure.

In some implementations, the lint blocking structure may include a filter screen and/or ribs.

The filter screen is arranged at a water outlet of the water supply structure, to prevent the lint from entering an inner cavity of the connector.

The ribs are arranged in at least a part of area of the inner cavity of the connector, to adsorb the lint.

In some implementations, the water supply structure may further include a spray structure.

The spray structure is communicated with a water inlet of the water supply structure, is configured to form spray water in an inner cavity of the connector, and is provided with an outlet facing toward the lint blocking structure.

In some implementations, the drying channel assembly may include a second heating member and a fan.

The controller further controls operation of the fan and operation of the second heating member in the steam washing mode.

In some implementations, the water supply structure may include a water inlet and a water outlet.

The water inlet is opened on the connector, is located at an outer side of the outer tub, and is connected to the first water supply pipeline.

The water outlet is opened on the connector, is located at an inner side of the outer tub, and is communicated with the inlet of the drying channel assembly.

The outer tub is provided, at a position where the connector is mounted, with a penetration opening into which the water outlet extends.

In some implementations, the penetration opening may be arranged on a rear side wall of the outer tub along an axial direction, and the connector is arranged behind the rear side wall.

In some implementations, a rear wall of the inner tub along an axial direction may be provided with multiple through holes, and a distance between each of the through holes and a rotation axis of the inner tub is less than or greater than a distance between the penetration opening and the rotation axis of the inner tub.

In some implementations, the controller may control the inner tub to rotate at a set rotation speed in the steam washing mode.

In some implementations, a part of the area at bottom of the outer tub may be protruded downward to form the water storage area recessed at an inner side of the outer tub.

In some implementations, the clothes treatment device may further include a low level sensor and a high level sensor. Both the low level sensor and the high level sensor are arranged on a rear side wall of the outer tub along an axial direction. A detected water level of the high level sensor is higher than a detected water level of the low level sensor and is lower than a lowest point of a rotation trajectory of the inner tub, and the detected water level of the low level sensor is higher than a highest position of the first heating member.

In some implementations, the controller configured to control the operation state of the water supply valve based on the water level of the water storage area may include:
the controller controls the water supply valve to be closed, in response to determining that the water level of the water storage area is higher than the detected water level of the high level sensor based on a detection signal of the high level sensor; and
the controller controls the water supply valve to be opened, in response to determining that the water level of the water storage area is lower than the detected water level of the low level sensor based on a detection signal of the low level sensor.

In some implementations, the clothes treatment device may further include a second water supply pipeline configured to supply washing water to the outer tub.

The controller is further configured to control the first heating member to heat the washing water in a washing mode.

According to the technical solutions provided by the embodiments of the application, water in the first water supply pipeline is guided to the interior of the outer tub by the water supply structure on the connector in the steam washing mode, which may prevent water entering through a traditional water supply pipeline from wetting clothes; furthermore, the water supply valve on the first water supply pipeline is controlled based on the water level of the water storage area, so that the water storage area is within the set water level range; the heating member heats water in the water storage area and generates steam, and sterilization, deodorization, ironing and other types of care are performed by the steam to clothes in a clothes treatment chamber; arrangement of additional steam generators are not required, and space in the outer tub is used to mount the heating member, such structure is simple, so that structure of the clothes treatment device is compact; furthermore, the water supply structure arranged on the connector may prevent wetting clothes in a process of supplying water to the water storage area, which is beneficial to meet requirements of steam washing and improve the user's experience.

### BRIEF DESCRIPTION OF THE DRAWINGS

FIG. 1 is a simplified schematic diagram of a clothes treatment device according to an embodiment of the application.
FIG. 2 is a schematic structural diagram of part of a clothes treatment device according to an embodiment of the application.
FIG. 3 is a partially enlarged schematic diagram of A in FIG. 2.
FIG. 4 is a schematic exploded view of a drum assembly according to an embodiment of the application.
FIG. 5 is a schematic exploded view of a clothes treatment device according to an embodiment of the application.
FIG. 6 is a schematic rear view of a clothes treatment device according to an embodiment of the application.
FIG. 7 is a schematic structural diagram of a connector according to an embodiment of the application.
FIG. 8 is another schematic structural diagram of a connector according to an embodiment of the application.

### Description of reference numerals:

drum assembly 10; outer tub 11; water storage area 11a; penetration opening 11b; rear side wall 111;
circumferential side wall 112; inner tub 12; clothes treatment chamber 12a; through hole 12b; circumferential tub wall 121;
rear wall 122; connector 20; water inlet 21; water outlet 22; communication opening 23; mounting hole 24;
rib 25; drying channel assembly 30; first heating member 40; first water supply pipeline 50; box body 60;
low level sensor 71; high level sensor 72; water supply valve 80; second water supply pipeline 90.

### DETAILED DESCRIPTION

In order to make the purpose, technical solutions and advantages of the application clearer, the application will be described in further detail below with reference to the drawings. The described embodiments should not be considered as limitations on the application. All other embodiments obtained by those of ordinary skill in the art without paying any creative work fall within the scope of protection of the application.

In descriptions of the application, reference is made to "some embodiments", which describe a subset of all possible embodiments; however, it may be understood that "some embodiments" may be the same subset or different subsets of all possible embodiments, and may be combined with each other without conflict.

In the descriptions of the application, reference is made to terms "first", "second" or the like, which are only intended to distinguish similar objects, and do not represent a specific order for the objects. It may understood that specific orders or sequences of "first", "second" or the like may be interchanged if allowable, to enable the embodiments of the application described here to be implemented in orders other than those illustrated or described here. Unless stated otherwise, "multiple" means at least two.

In the descriptions of the application, it should be understood that orientation or positional relationships indicated by terms "upper", "lower", "front", "rear", "left", "right", "vertical", "horizontal", "top", "bottom", "inner", "outer", or the like are based on orientation or positional relationships shown in the drawings, and are only intended to facilitate describing the application and simplifying the descriptions, rather than indicating or implying that the referred device or element must have a particular orientation, configure and operate in a particular orientation, and thus should not be understood as limitation of the application.

In the descriptions of the application, it should be noted that unless otherwise specified and defined clearly, terms "mount", "connect" and "connecting" should be understood in a broad sense, for example, it may be a fixed connection, or a detachable connection, or an integral connection; may be a mechanical connection, or an electrical connection; may be a direct connection, or an indirect connection through an intermediate medium; may be internal communication between two elements. Specific meanings of the above terms in the application may be understood by those of ordinary skill in the art according to specific cases.

In the application, unless otherwise specified and defined clearly, a first feature being "above" or "below" a second feature may include that the first feature is in direct contact with the second feature, or may include that the first feature is not in direct contact with the second feature, instead, in contact with the second feature through additional features there-between. Furthermore, a first feature being "above", "over" and "on top of" a second feature includes that the first feature is directly above and obliquely above the second feature, or simply means that a horizontal height of the first feature is higher than that of the second feature. A first feature being "below", "under" and "underneath" a second feature includes that the first feature is directly below and obliquely below the second feature, or simply means that a horizontal height of the first feature is lower than that of the second feature.

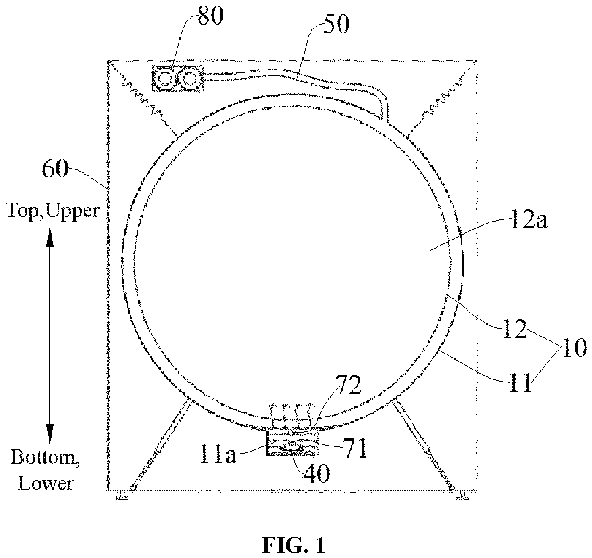

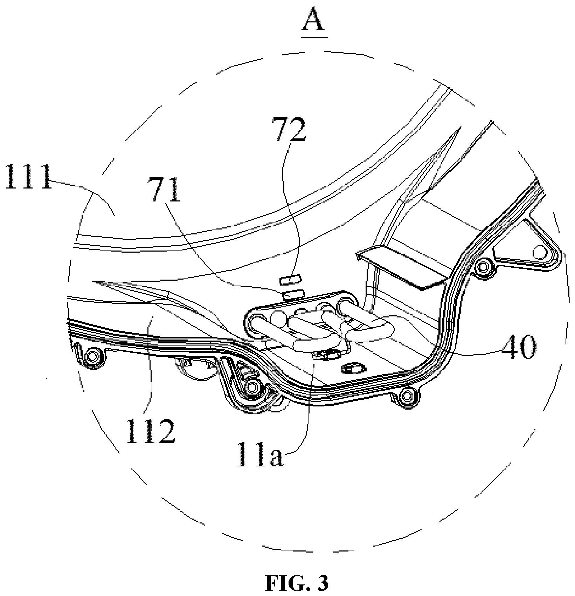

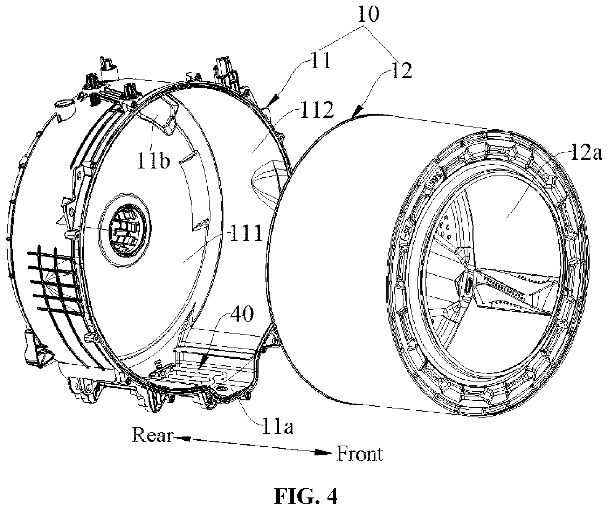

An embodiment of the application provides a clothes treatment device, with reference to FIG. 1 to FIG. 6, the clothes treatment device includes a drum assembly 10, a first heating member 40, a first water supply pipeline 50, a connector 20, and a controller (not shown in the figures). The drum assembly 10 includes an outer tub 11 and an inner tub 12 rotatably arranged in the outer tub 11. Space in the inner tub 12 is a clothes treatment chamber 12a. A front end of the drum assembly 10 in an axial direction is opened to form a clothes access opening, through which a user may take clothes out and put clothes in.

The first water supply pipeline 50 is communicated with an external water source (such as tap-water), and a water supply valve 80 is arranged on the first water supply pipeline 50. An on/off state of the water supply valve 80 controls whether the first water supply pipeline 50 is communicated with the external water source.

With reference to FIG. 1 to FIG. 4, a water storage area 11a is provided in interior of the outer tub 11. The first heating member 40 is arranged in the water storage area 11a, and may heat water in the water storage area 11a.

Exemplarily, as shown in FIG. 1, the clothes treatment device includes a box body 60, and the drum assembly 10 is arranged in the box body 60.

It may be understood that the inner tub 12 is provided with multiple through holes 12b, and airflow and/or water flow may be exchanged with the clothes treatment chamber 12a between the inner tub 12 and the outer tub 11 through multiple through holes 12b. A number of the through holes 12b may not be limited, as long as exchange of airflow and/or water flow between the inner tub 12 and the outer tub 11 may be met.

Specific shapes of the through hole 12b are not limited, for example, the shape of the through hole 12b may be a circle, an ellipse, a polygon, or the like, which is not specifically limited here.

Specific positions of the through hole 12b on the inner tub 12 are not limited. Exemplarily, in some embodiments, all the through holes 12b are arranged on a circumferential tub wall 121 of the inner tub 12; in some other embodiments, all the through holes 12b are arranged on a rear wall 122 at one end of the inner tub 12 away from the clothes access opening; in some other embodiments, part of the through holes 12b are arranged on the circumferential tub wall 121 of the inner tub 12, and another part of the through holes 12b are arranged on a rear wall 122 of the inner tub 12 in the axial direction. No specific limitation is made thereto.

Exemplarily, the connector 20 is arranged on the outer tub 11, and is provided with a water supply structure configured to guide water in the first water supply pipeline 50 to the interior of the outer tub 11. That is, water on the first water supply pipeline 50 may be guided to the interior of the outer tub 11 by the water supply structure, and converged to the water storage area 11a in the outer tub 11 under an action of gravity.

Exemplarily, the controller is configured to control an operation state of the water supply valve 80 based on a water level of the water storage area 11a in a steam washing mode (the steam washing mode referred in the embodiment includes steam utilization in a washing process, and also includes steam utilization in a drying process), so that the water storage area 11a is within a set water level range, and control the first heating member 40 to heat water in the water storage area 11a within the set water level range, to generate steam. The generated steam may enter the clothes treatment chamber 12a through the above through holes 12b, to care clothes in the clothes treatment chamber 12a.

It should be noted that the steam washing mode is mainly based on the steam generated by heating, to perform sterilization, deodorization, ironing and other types of care to clothes in the clothes treatment chamber 12a. Therefore, in the steam washing mode, water should be prevented from entering to wet clothes as much as possible.

The set water level range may meet a safe water level required for heating by the first heating member 40, to prevent the first heating member 40 from dry-burning and damaging itself and surrounding devices, and the set water level range may prevent water in the water storage area 11a from entering the inner tub 12 to wet clothes. Exemplarily, the set water level range is higher than a highest position of the first heating member 40 and is lower than a lowest point of a rotation trajectory of the inner tub 12, so that, the water level of the water storage area 11a is at the safe water level in a heating process of the first heating member 40.

According to the clothes treatment device of the embodiment of the application, when a steam mode needs to be turned on, water in the first water supply pipeline 50 is guided to the interior of the outer tub 11 by the water supply structure on the connector 20, which may prevent water from entering to wet clothes as a traditional method; furthermore, the water supply valve 80 on the first water supply pipeline 50 is controlled based on the water level of the water storage area 11a, so that the water storage area 1 1a is within the set water level range; the heating member heats water in the water storage area 11a and generates steam, and sterilization, deodorization, ironing and other types of care are performed by the steam to clothes in the clothes treatment chamber 12a; arrangement of additional steam generators are not required, and space in the outer tub 11 is used to mount the heating member, such structure is simple, so that structure of the clothes treatment device is compact; furthermore, the water supply structure arranged on the connector 20 may prevent wetting clothes in a process of supplying water to the water storage area 11a, which is beneficial to meet requirements of steam washing and improve the user's experience.

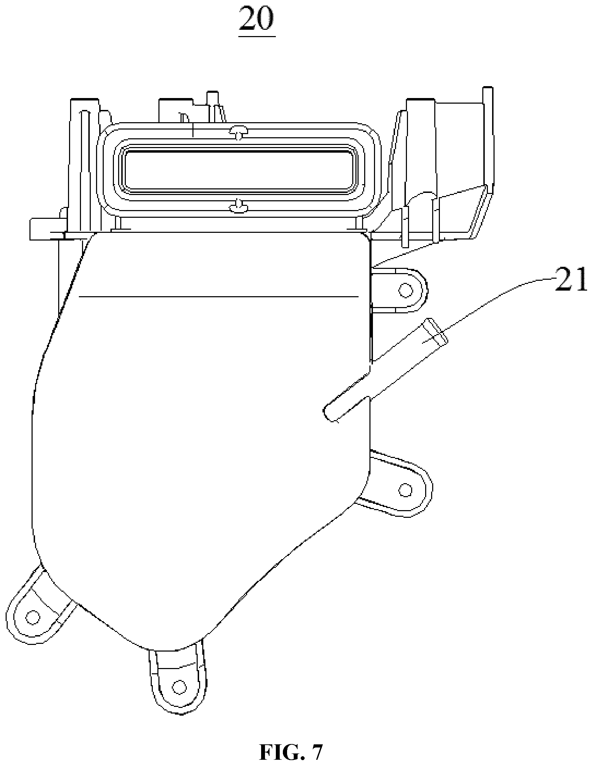

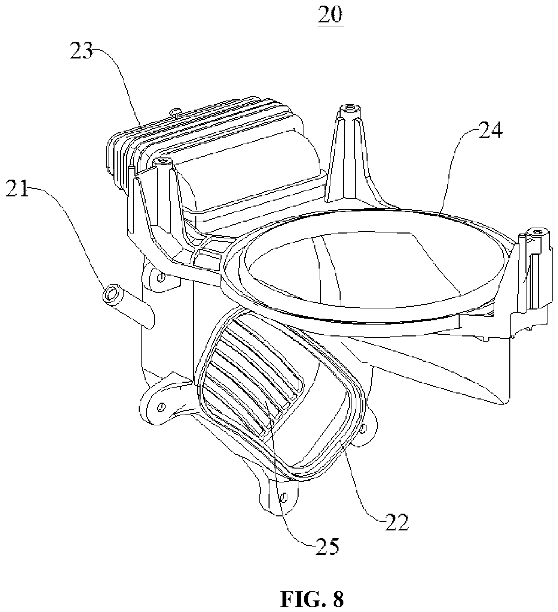

Exemplarily, as shown in FIG. 7 and FIG. 8, the water supply structure on the connector 20 includes a water inlet 21 and a water outlet 22. The water inlet 21 is opened on the connector 20, is located at an outer side of the outer tub 11, and is connected to the first water supply pipeline 50. The water outlet 22 is opened on the connector 20 and is located at an inner side of the outer tub 11. Correspondingly, the outer tub 11 is provided, at a position where the connector 20 is mounted, with a penetration opening 1 1b into which the water outlet 22 extends.

It should be noted that a side wall of the outer tub 11 includes a circumferential side wall 112 and a rear side wall 111, and the penetration opening 11b may be arranged on the circumferential side wall 112 or on the rear side wall 111, which is not limited here.

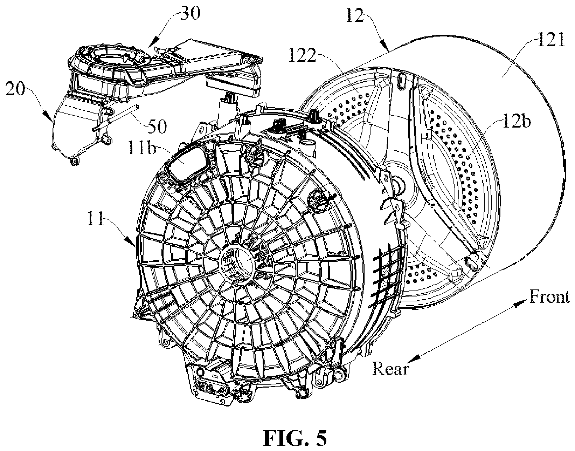

Exemplarily, as shown in FIG. 5, the penetration opening 11b is arranged on a rear side wall 111 of the outer tub 11 along an axial direction, and the connector 20 is arranged behind the rear side wall 111. In this way, not only mounting space of the connector 20 is saved, but also the water outlet 22 may be positioned behind the rear side wall 111 of the inner tub 12 after extending into the outer tub 11, thereby preventing water flowing out of the water outlet 22 from directly entering the inner tub 12 to wet clothes.

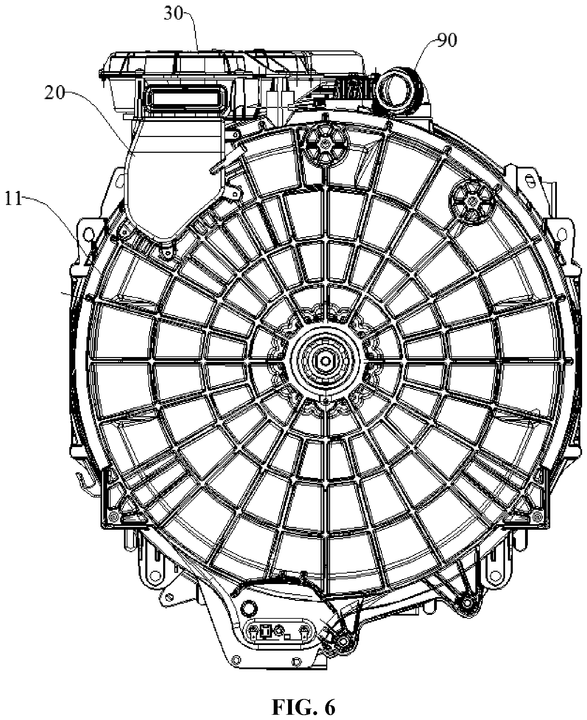

Exemplarily, the connector 20 is provided with a mounting hole 24, the rear side wall 111 of the outer tub 11 may be provided with a mounting position cooperated with the mounting hole, and the connector 20 may be locked tightly by screws to be fixed on the outer tub 11. For example, as shown in FIG. 6, the connector 20 is locked tightly by four screws to be fixed on the rear side wall 111 of the outer tub 11.

In some embodiments, the clothes treatment device further includes a drying channel assembly 30. The connector 20 further communicates the interior of the outer tub 11 to an inlet of the drying channel assembly 30. Correspondingly, at least a part of the steam enters the inner tub 12 after sequentially passing through the connector 20 and the drying channel assembly 30.

Exemplarily, the clothes treatment device includes a drying channel assembly 30 arranged at a top side of the outer tub 11 and a front door seal arranged at a front side of the drum assembly 10, a hollow structure is present in interior of the connector 20, and a communication opening 23 connected to an inlet of the drying channel assembly 30 is arranged at top of the connector 20, so that the water outlet 22 of the connector 20 may be used as an air inlet of the drying channel assembly 30. An air inlet of the inner tub 12 may be arranged at top of the front door seal, and an air outlet of the drying channel assembly 30 is communicated with the air inlet of the inner tub 12.

It may be understood that a second heating member and a fan may be arranged in the drying channel assembly 30; and the controller further controls operation of the fan and operation of the second heating member in the steam washing mode. The fan may provide a blowing force for airflow in the outer tub 11 to flow into the drying channel assembly 30, and the second heating member may reheat the airflow in the drying channel assembly 30, thereby generating steam and/or superheated steam. For example, part of the steam generated by heating of the first heating member may be mixed with clothes in the clothes treatment chamber 12a by passing through the through holes 12b of the inner tub 12 to perform sterilization, deodorization, ironing and other types of care to the clothes, and part of the steam may also flow from bottom to top, enter the drying channel assembly 30 after sequentially passing through the water outlet 22 and the communication opening 23, and is reheated by the second heating member to form superheated steam, and then the superheated steam passes through the air inlet of the inner tub 12 to perform care to the clothes in the clothes treatment chamber 12a. In this way, care of the clothes in the clothes treatment chamber 12a by dual steam (steam generated by heating of the first heating member 40 and superheated steam generated by heating of the second heating member) may be achieved, which may effectively improve operation efficiency in the steam washing mode.

It should be noted that after the steam heated by the first heating member 40 is introduced into the drying channel assembly 30, the steam may be converted into gaseous superheated steam after reheating by the second heating member, that is, water vapor with temperature ≥ 100°C; the superheated steam is introduced into the inner tub 12 under an action of the fan to perform sterilization, deodorization, ironing and other types of care to the clothes in the clothes treatment chamber 12a, the superheated steam may achieve effects of sterilization, deodorization and ironing better, which is beneficial to improve the user's experience.

Specific types of the first heating member 40 and the second heating member are not limited here, as long as the first heating member and the second heating member may play a heating role. Exemplarily, each of the first heating member 40 and the second heating member may be an electric heating tube.

It should be noted that the steam washing mode may be an independent treatment program, or may be a treatment process in a certain treatment program. For example, the steam washing mode may also be a treatment process in a drying mode, to eliminate creases of the clothes after drying. Similarly, the drying mode may be an independent treatment program, or may be a treatment process in a certain treatment program. In some specific treatment programs, the steam washing mode and the drying mode may coexist.

Exemplarily, the penetration opening 11b on the outer tub 11 is opened at a position close to a top end of the rear side wall 111, that is, the penetration opening 1 1b is arranged at an upper part of the rear side wall 111, that is, position of the penetration opening 1 1b is higher than a height where a rotation center line of the inner tub 12 is located. Correspondingly, the connector 20 is mounted at an upper part of the rear side wall 111 (as shown in FIG. 6). Based on such structure, a water outlet position of the water outlet 22 may be made higher. In this way, water flowing out of the water outlet 22 may exchange heat with steam in the outer tub 11 entering the drying channel assembly 30 from bottom to top along the water outlet 22, so that water entering the water storage area 11a may be preheated, and the first heating member 40 may reduce time-consuming and energy consumption required by heating to generate steam, which is beneficial to timely generate steam required by steam washing in the outer tub 11 and accelerate steam generation efficiency in the outer tub 11.

It may be understood that the water outlet 22 on the connector 20 is not only used as an outlet of water in the first water supply pipeline 50, but also used as an inlet for airflow in the outer tub 11 to enter the drying channel assembly 30. Water in the first water supply pipeline 50 may be fully mixed with airflow which will enter the drying channel assembly 30, to perform heat exchange there-between, and water exported from the water outlet 22 may also be mixed with airflow (i.e., steam) flowing from bottom to top under an action of gravity, to perform heat exchange there-between, so that temperature of water converged to a water storage opening may reach a set temperature, which may shorten time of heating by the first heating member 40 to generate steam and accelerate steam generation efficiency in the outer tub 11.

In some embodiments, the connector 20 is provided with a lint blocking structure configured to filter lint in the air, and water in the first water supply pipeline 50 is also used to clean the lint blocking structure.

It may be understood that in the steam washing mode, lint and other impurities are easily carried in the steam after mixing with clothes, and the lint blocking structure may filter lint and other impurities in the airflow. Water in the first water supply pipeline 50 is also used to clean the lint blocking structure, that is, water flow for removing lint may be used to achieve steam for inflow of water, which may not only simplify structural setting of the water supply pipeline and but also prevent a traditional inflow way of water from wetting clothes, thereby achieving unified control of removing lint automatically and replenishing water by steam in the steam washing mode.

In some embodiments, the lint blocking structure includes a filter screen and/or ribs 25. The filter screen is arranged at a water outlet 22 of the water supply structure, to prevent the lint from entering an inner cavity of the connector 20. The ribs 25 are arranged in at least a part of area of the inner cavity of the connector 20, to adsorb the lint.

In an example, the filter screen is arranged at the water outlet 22, so that lint and other impurities may be effectively prevented from entering the drying channel assembly 30 along with the airflow.

In another example, the filter screen may be omitted, multiple ribs 25 are arranged in the inner cavity of the connector 20, a groove between adjacent ribs 25 may effectively absorb lint and other impurities carried in airflow passing through it, and such impurities may be automatically cleaned by water flow of the first water supply pipeline 50, which may also achieve an effect of effectively prevent lint and other impurities from entering the drying channel assembly 30 along with the airflow. The ribs 25 in the inner cavity of the connector 20 may be integrally formed on an inner wall of the connector 20.

In some embodiments, the water supply structure further includes a spray structure (not shown in the figures). The spray structure is communicated with the water inlet 21, is configured to form spray water in an inner cavity of the connector 20, and is provided with an outlet facing toward the lint blocking structure, to clean lint attached to the inner wall of the connector 20 or lint on the filter screen. Exemplarily, the spray structure may be a venturi-shaped nozzle opened on the inner wall of the connector 20, so that spray water is formed in the inner cavity of the connector 20, and the spray water may enhance an effect of cleaning lint attached to the inner wall of the connector 20, and may prevent lint and other impurities on clothes from being brought into the drying channel assembly 30 in the steam washing process to result in potential safety hazards. It may be understood that the water supply structure has dual functions of providing a water source to the first heating member 40 and cleaning lint, which may reduce arrangement of pipelines on the clothes treatment device and further reduce cost of the device.

Exemplarily, in some embodiments, a rear wall 122 of the inner tub 12 along an axial direction is provided with multiple through holes 12b, and a distance between each of the through holes 12b and a rotation axis of the inner tub 12 is less than or greater than a distance between the penetration opening 11b and the rotation axis of the inner tub 12. That is, in a plane projection perpendicular to the rotation axis of the inner tub 12, the distance between the penetration opening 11b and the rotation axis of the inner tub 12 is greater than or less than a rotation radius corresponding to each of the through holes 12b, that is, a projection of the through hole 11b on the rear wall 122 of the inner tub 12 along the axial direction does not coincide with an area where each of the through holes 12b is located. In this way, water exported from the water outlet 22 may be effectively prevented from directly entering the inner tub 12 through the through holes 12b on the inner tub 12 to wet clothes.

In some embodiments, the controller controls the inner tub 12 to rotate at a set rotation speed in the steam washing mode.

It may be understood that during rotation of the inner tub 12, at least a part of water flowing from the water outlet 22 into the outer tub 11 will be ejected out by the axial rear wall 122 in a rotation state, reducing a possibility of water flow entering the clothes treatment chamber 12a from the through holes 12b, thereby reducing a possibility of the water flow wetting the clothes in the clothes treatment chamber 12a. Furthermore, during rotation of the inner tub 12, a trajectory swept by the water outlet 22 on the axial rear wall 122 of the inner tub 12 is substantially a circular area, and the inner tub 12 is not provided with through holes 12b corresponding to the circular area. In this way, even though water flow flowing from the water outlet 22 into the outer tub 11 rushes towards the axial rear wall 122 of the inner tub 12 at a high speed, the water flow will be blocked by the axial rear wall 122 and will not pass through the through holes 12b directly. In this way, it may reduce a possibility of water flow from the water outlet 22 entering the clothes treatment chamber 12a, thereby reducing a possibility of water wetting the clothes in the clothes treatment chamber 12a in the steam washing mode.

In the embodiment of the application, specific structures of the connector 20 are not limited. Exemplarily, the connector 20 may be a structure fitted with an upper side of the rear side wall 111 of the outer tub 11, the water outlet 22 extends into the interior of the outer tub 11 from the penetration opening 11b of the outer tub 11, and the whole connector 20 is arranged to cover at the penetration opening 11b and is connected to the penetration opening 11b in a sealed manner. The penetration opening 23 of the connector 20 is connected to the inlet of the drying channel assembly 30. The connector 20 has a small volume, and a mounting space required by the connector 20 is small too. In case that size of the drum assembly 10 of the clothes treatment device is the same, the clothes treatment device of the embodiment has a smaller appearance size in axial and height directions.

In some embodiments, a part of area at bottom of the outer tub 11 is protruded downward to form the water storage area 11a recessed at an inner side of the outer tub 11. With reference to FIG. 1, position of the water storage area 11a is lower than the lowest point of the rotation trajectory of the inner tub 12, and water entering the outer tub 11 from the water outlet 22 may be converged to the water storage area 11a under an action of gravity, and water may be converged to the water storage area 11a without providing a special flow guiding structure.

In some embodiments, the clothes treatment device further includes a low level sensor 71 and a high level sensor 72, both the low level sensor 71 and the high level sensor 72 are configured to detect a water level of the water storage area 11a. Both the low level sensor 71 and the high level sensor 72 are arranged on a rear side wall 111 of the outer tub 11 along an axial direction. A detected water level of the high level sensor 72 is higher than a detected water level of the low level sensor 71 and is lower than a lowest point of a rotation trajectory of the inner tub 12, and the detected water level of the low level sensor 71 is higher than a highest position of the first heating member 40. Both the low level sensor 71 and the high level sensor 72 are communicatively connected to the controller, the low level sensor 71 and the high level sensor 72 send detection signals respectively, and the controller identifies whether the water level of the water storage area 11a is appropriate according to the detection signals.

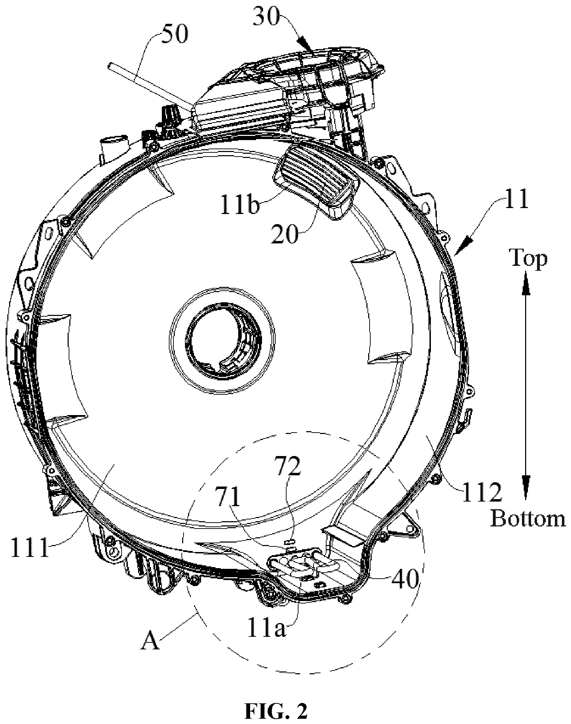

Mounting positions of the low level sensor 71 and the high level sensor 72 are not limited. Exemplarily, with reference to FIG. 2, both the low level sensor 71 and the high level sensor 72 are arranged on the rear side wall 111 of the outer tub 11. On one hand, it facilitates mounting from the rear of the rear side wall 111, and on the other hand, it also facilitates arranging wires of the low level sensor 71, the high level sensor 72 and the heating member at a rear side of the rear side wall 111 centrally.

Specific types of the low level sensor 71 are not limited, as long as the low level sensor 71 may detect the water level. Specific types of the high level sensor 72 are not limited, as long as the high level sensor 72 may detect the water level.

In some embodiments, the controller configured to control the operation state of the water supply valve 80 based on the water level of the water storage area 11a includes:
the controller controls the water supply valve 80 to be closed, in response to determining that the water level of the water storage area 11a is higher than the detected water level of the high level sensor 72 based on a detection signal of the high level sensor 72; and
the controller controls the water supply valve 80 to be opened, in response to determining that the water level of the water storage area 11a is lower than the detected water level of the low level sensor 71 based on a detection signal of the low level sensor 71.

It may be understood that when the controller determines that the water level of the water storage area 11a is higher than the detected water level of the high level sensor 72 based on the detection signal of the high level sensor 72, then the controller determines a risk of water in the water storage area 11a overflowing into the inner tub 12, and controls the water supply valve 80 to be closed, thereby stopping water supplying from the water outlet 22 to the outer tub 11; when the controller determines that the water level of the water storage area 11a is lower than the detected water level of the low level sensor 71 based on the detection signal of the low level sensor 71, then the controller determines that amount of water in the water storage area 11a is relatively low, and controls the water supply valve 80 to be opened, to supply water from the water outlet 22 to the outer tub 11 so as to replenish water for the water storage area 11a. In this way, in the steam washing mode, the water level of the water storage area 11a may always be kept at a set safe water level, which may meet requirements of the first heating member 40 generating steam by heating.

In some embodiments, the clothes treatment device further includes a second water supply pipeline 90 (as shown in FIG. 6) configured to supply washing water to the outer tub 11. The second water supply pipeline 90 may be an inlet corrugated pipe, and a water outlet 22 of the inlet corrugated pipe may directly inject water into the outer tub 11, and during injection of water, water flow may enter the clothes treatment chamber 12a through the through holes 12b on the inner tub 12, and water in the outer tub 11 may also enter the clothes treatment chamber 12a through the through holes 12b on the inner tub 12, thereby wetting clothes sufficiently. The controller is further configured to control the first heating member 40 to heat the washing water in a washing mode.

It may be understood that there is a set water level for heating and washing in the washing mode, and the controller determines that a water level of the outer tub 11 reaches the set water level, and controls the first heating member 40 to heat the washing water, thereby achieving an effect of heating and washing. In this way, the first heating member 40 in the embodiment of the application may achieve sharing of heating during heating and washing with heating during steam washing. Therefore, cost of the device may be saved.

Exemplarily, the second water supply pipeline 90 and the first water supply pipeline 50 may share the water supply valve 80. For example, the water supply valve 80 may be a three-way valve provided with an inlet, a first outlet and a second outlet, the inlet is communicated with an external water source, the first outlet is communicated with the first water supply pipeline 50, and the second outlet is communicated with the second water supply pipeline 90. In the steam washing mode, the first outlet of the water supply valve 80 is controlled to open, so that the first water supply pipeline 50 supplies water to the outer tub 11, to prevent water from entering to wet clothes in the steam washing mode. In the washing mode, the second outlet of the water supply valve 80 is controlled to open, so that the second water supply pipeline 90 supplies water to the outer tub 11.

It may be known from the above descriptions that the clothes treatment device of the embodiment of the application may share the first heating member 40 heating the washing water, to heat water in the water storage area within the outer tub 11 to generate steam, and the second heating member in the drying channel may reheat steam to form superheated steam, thereby improving operation efficiency of steam washing; furthermore, in the steam washing mode, the water supply structure arranged on the connector 20 supplies water to the outer tub 11, which may prevent clothes in the inner tub 12 from getting wet in the water supply process, and may remove lint and other impurities carried in the airflow, to avoid potential safety hazards caused by impurities entering the drying channel assembly 30.

It should be noted that the technical solutions described in the embodiments of the application may be combined arbitrarily without conflict.

The above descriptions are only specific implementations of the application, however, the scope of protection of the application is not limited thereto. Any variation or replacement easily conceived by those skilled in the art within the technical scope disclosed by the application should be included in the scope of protection of the application. Therefore, the scope of protection of the application should be subjected to the scope of protection of claims.

## Claims

1. A clothes treatment device, comprising:
a drum assembly, comprising an outer tub and an inner tub rotatably arranged in the outer tub, a water storage area being provided in the interior of the outer tub;
a first heating member, arranged in the water storage area;
a first water supply pipeline, on which a water supply valve is arranged;
a connector, arranged on the outer tub, and provided with a water supply structure configured to guide water in the first water supply pipeline to the interior of the outer tub;
a controller, configured to control an operation state of the water supply valve based on a water level of the water storage area in a steam washing mode, and control the first heating member to heat water in the water storage area to generate steam.

2. The clothes treatment device of claim 1, further comprising a drying channel assembly,
the connector further communicating the interior of the outer tub to an inlet of the drying channel assembly,
correspondingly, at least a part of the steam entering the inner tub after sequentially passing through the connector and the drying channel assembly.

3. The clothes treatment device of claim 1, wherein the connector is provided with a lint blocking structure configured to filter lint in the air, and water in the first water supply pipeline is also used to clean the lint blocking structure.

4. The clothes treatment device of claim 3, wherein the lint blocking structure comprises:
a filter screen, arranged at a water outlet of the water supply structure, to prevent the lint from entering an inner cavity of the connector; and/or
ribs, arranged in at least a part of area of the inner cavity of the connector, to adsorb the lint.

5. The clothes treatment device of claim 3, wherein the water supply structure further comprises:
a spray structure, communicated with a water inlet of the water supply structure, configured to form spray water in an inner cavity of the connector, and provided with an outlet facing toward the lint blocking structure.

6. The clothes treatment device of claim 2, wherein the drying channel assembly comprises a second heating member and a fan, and
the controller further controls operation of the fan and operation of the second heating member in the steam washing mode.

7. The clothes treatment device of claim 2, wherein the water supply structure comprises:
a water inlet, opened on the connector, located at an outer side of the outer tub, and connected to the first water supply pipeline; and
a water outlet, opened on the connector and located at an inner side of the outer tub,
the outer tub being provided, at a position where the connector is mounted, with a penetration opening into which the water outlet extends.

8. The clothes treatment device of claim 7, wherein the penetration opening is arranged on a rear side wall of the outer tub along an axial direction, and the connector is arranged behind the rear side wall.

9. The clothes treatment device of claim 7, wherein a rear wall of the inner tub along an axial direction is provided with a plurality of through holes, and a distance between each of the through holes and a rotation axis of the inner tub is less than or greater than a distance between the penetration opening and the rotation axis of the inner tub.

10. The clothes treatment device of claim 1, wherein the controller controls the inner tub to rotate at a set rotation speed in the steam washing mode.

11. The clothes treatment device of claim 1, wherein a part of the area at the bottom of the outer tub is protruded downward to form the water storage area recessed at an inner side of the outer tub.

12. The clothes treatment device of claim 1, further comprising a low level sensor and a high level sensor,
both the low level sensor and the high level sensor being arranged on a rear side wall of the outer tub along an axial direction,
a detected water level of the high level sensor being higher than a detected water level of the low level sensor and lower than a lowest point of a rotation trajectory of the inner tub, and the detected water level of the low level sensor being higher than a highest position of the first heating member.

13. The clothes treatment device of claim 12, wherein the controller configured to control the operation state of the water supply valve based on the water level of the water storage area comprises:
the controller controls the water supply valve to be closed, in response to determining that the water level of the water storage area is higher than the detected water level of the high level sensor based on a detection signal of the high level sensor; and
the controller controls the water supply valve to be opened, in response to determining that the water level of the water storage area is lower than the detected water level of the low level sensor based on a detection signal of the low level sensor.

14. The clothes treatment device of claim 1, further comprising a second water supply pipeline configured to supply washing water to the outer tub,
the controller further configured to control the first heating member to heat the washing water in a washing mode.
